# NEW EUROPEAN PATENT SPECIFICATION

(11) **EP 0 414 383 B2**
(45) Date of publication and mention of the opposition decision: **16.06.2010**
(45) Mention of the grant of the patent: 01.05.1996
(21) Application number: 90308188.3
(22) Date of filing: 26.07.1990
(51) Int. Cl.: C04B 35/58

(54) **Wear-resistant member**
Verschleissbeständiges Bauteil
Membre résistant à l'usure

(30) Priority: 27.07.1989 JP 19533189
(43) Date of publication of application: 27.02.1991
(73) Proprietor: KABUSHIKI KAISHA TOSHIBA, Kawasaki-shi, Kanagawa-ken 210-8572 (JP)
(72) Inventor: Suyama, Shoko, c/o Intellectual Property Division, Minato-ku, Tokyo (JP); Abe, Yutaka, c/o Intellectual Property Division, Minato-ku, Tokyo (JP); Komatsu, Michiyasu, c/o Intellectual Property Div., Minato-ku, Tokyo (JP)
(74) Representative: Bailey, David Martin

(56) References cited:
- EP-A- 0 272 066
- EP-A1- 0 015 421
- EP-A1- 0 366 443
- EP-A2- 0 176 315
- EP-A2- 0 178 169
- EP-A2- 0 187 539
- EP-A2- 0 272 066
- DE-B2- 2 621 523
- US-A- 4 407 970
- US-A- 4 904 624
- WORLD PATENTS INDEX LATEST Week 8411, Derwent Publications Ltd., London, GB; AN 84-065724 & JP-A-59 021 413 (SUMITOMO ELEC IND KK) 3 February 1984
- WORLD PATENTS INDEX LATEST Week 8818, Derwent Publications Ltd., London, GB; AN 88-122579 & JP-A-63 065 960 (TOSHIBA KK) 24 March 1988
- M. CONCANNON ET AL.: 'Sinter/HIP of advanced ceramics and ceramic matrix composites' PROCEEDINGS OF THE SECOND INTERNATIONAL CONFERENCE ON HOT ISOSTA- TIC PRESSING 07 June 1989, GAITHERSBURG, MD, USA, pages 329 - 336
- KATSUHISA YABUTA ET AL.: 'development of gas pressure sintered silicon nitride and lts automotive and industrial application; international congress and exposition' SAE TECHNICAL PAPER SERIES 27 February 1989, DETROIT, MICHIGAN,

## Description

The present invention relates to a wear-resistant member in the form of a bearing member and particularly to wear-resistant bearing members suitable for e.g. a ball and/or roller bearing member.

Silicon nitride ceramics have been proposed as materials for mechanical parts used under severe conditions because of its good heat resistance, corrosion resistance and wear resistance. For example, attempts have been made to use sintered silicon nitride as a material for balls and rollers, i.e. rolling members in a bearing.

But silicon nitride itself has relatively poor sintering properties. Ceramics mainly consisting of silicon nitride are conventionally produced by a method which includes pressure-tightening sintering with the use of an additive, or involves reaction sintering according to a nitriding process.

Among the above sintering methods, the former which effects pressure-tightening sintering by using an additive promotes liquid sintering by the additive, thereby allowing the sintered material to have high density. Since this method can be used in conjunction with various other sintering methods, it is commonly used. As an additive for promoting such liquid sintering, or as a sintering auxiliary, oxides or nitrides of Mg, Al, Y, Sc, La, or Ce have been used solely or in a combination of two or more thereof. For example the reader is referred to EP-A-0 272 066 for details of silicon nitride bodies which incorporate yttrium oxide, and to EP-A-0 178 169/EP-A-O 176 315 which are concerned with sintered ceramic bearings based on silicon nitride, and the oxides of magnesium, aluminium and yttrium.

Such a known sintering auxiliary can remain, however, as an amorphous phase in the crystalline grain boundary in the sintered body depending upon the quantity added to the main ceramic. This amorphous phase softens at a high temperature, deteriorating high-temperature strength of the silicon nitride ceramics. Sintering auxiliaries have been subjected to investigations as to compositions and quantities.

A specific method for producing a sintered silicon nitride is as follows:

First, a sintering auxiliary is added to silicon nitride powder and thoroughly mixed to prepare the raw material powder. Then, the mixed powder thus prepared is subjected to press moulding or injection moulding for forming into a moulded product. The moulded product can be sintered under normal pressure in the atmosphere or under pressure. A hot press method can be used to effect the moulding and the sintering in a single process. An appropriate method is selected depending on the shape and use of the product produced.

Silicon nitride ceramics prepared by sintering under normal pressure generally have larger pores formed within the sintered product and a relatively lower pressure-resistant strength. Therefore, when silicon nitride ceramics are used as a bearing member for example, the hot press method which does not readily generate pores can be used, as can a method which combines an HIP (Hot Isostatic Pressing) treatment with an atmospheric pressure sintering so that a dense sintered product is produced.

As described above, sintering methods which utilize the good properties of well sintered silicon nitride have been investigated. However, bearings produced from silicon nitride ceramics have the disadvantage that rolling fatigue life: a significant property as a bearing; is subject to wide variation. Using the HIP treatment together with sintered silicon nitride of lowered porosity improves relative rolling fatigue properties but has not yet effectively reduced this variation in rolling fatigue life.

Ceramic bearings are often used as a bearing for use in molten metal where a metallic bearing cannot be used. Such use requires the bearing to be corrosion resistant to acid, alkali, molten metal and the like. However, they have a disadvantage that they generally tend to corrode at a location where the sintering auxiliary is contained in the silicon nitride ceramic.

Accordingly, an object of the present invention is to seek to provide reliable, wear resistant members with attractive sliding properties, particularly in rolling fatigue properties.

Another object of the present invention is to seek to provide wear-resistant members with desirable corrosion resistance.

Wear-resistant members according to the present invention are wear-resistant members according to claim 1.

One method for producing a wear-resistant member in accordance with claim 1 includes a step of adding and mixing 0.1 to 5% by weight of yttrium oxide powder as a sintering auxiliary to silicon nitride powder, a step of using this mixed powder as a raw material powder and moulding it into a desired shaped wear-resistant member, a step of sintering the moulded product to achieve a porosity of 2% or below, and a step of subjecting the sintered product to Hot Isostatic Pressing (hereinafter referred to as HIP) so as to make its porosity 1% or below.

The above yttrium oxide and aluminium oxide contained as the sintering auxiliary component are present as an amorphous phase in the sintered body. This amorphous phase generally exists in crystalline grain boundary but is segregated to exist depending on the production method of the sintered body. This segregation of the amorphous phase is formed by a plurality of dispersions which range from the inside to the surface of the sintered body. Therefore, there are segregated portions in various sizes.

The present invention is based on the unexpected finding that segregation of the amorphous phase exerts considerable influence on sliding properties. For wear-resistant members of the present invention, the segregation of the amorphous phase existing in the sintered body is defined to be no higher than, but preferably less than 50 µm, segregation size being subsequently defined.

Heretofore, the rolling fatigue life of ceramic bearings was considered to be influenced by the presence or absence of pores which were formed through sintering. To remove the pores, HIP treatment was used which prolonged service life. But, even among ceramics which underwent HIP treatment and contained only a small number of pores, some had short rolling fatigue life. Thus, the basic factor which affected rolling fatigue life had not been fully appreciated.

Detailed examination was conducted using electron microscope reflection electron images of the inside structure of silicon nitride ceramics which had been subjected to the HIP treatment. It was found that the pores which had previously existed almost disappeared as a result of the HIP treatment, but the amorphous phase mainly consisting of sintering auxiliary component, being of comparatively high flowability, flowed into those portions where the pores were present and segregated there.

The inventors found that when such silicon nitride ceramics containing segregated portions of amorphous phase were used as wear-resistant members, such as a bearing, peeling tended to occur in the segregated portions if any of such segregated portions had a size exceeding a certain value, thereby decreasing service life.

That is, the segregation of the amorphous phase existing in several and various sizes may not cause peeling (which may be an obstacle to practical use) where its size is 50 µm or below, even if its size is large. Therefore, wear-resistant members of the present invention encompass silicon nitride ceramics which have in the overall amorphous phase a maximum segregation size of 50 µm or less, to prevent peeling of the segregated portions, to improve the bearing property of the wear-resistant member, particularly rolling fatigue properties and to reduce variation therein.

The above amorphous phase mainly consists of the sintering auxiliary component. Its segregation is formed when the amorphous phase, which has a relatively high flowability, is condensed by e.g. HIP treatment into the pores formed when sintering as described above and exists on the triple point of grain boundary. The segregation size of the amorphous phase is represented by the diameter of a circle surrounding the segregation in question.

A method for producing a wear-resistant member of the present invention, mainly consisting of silicon nitride ceramic which is controlled so as to include a segregated amorphous phase, of a segregation size of 50 µm or below is now described for purpose of illustration.

Silicon nitride powder is added with a certain amount of a sintering auxiliary powder and mixed fully to prepare a raw material powder. As the sintering auxiliary, yttrium oxide powder is used. Yttrium oxide is used mixed with one or more other components. Aluminium oxide powder is used in conjunction with yttrium oxide as a sintering auxiliary component.

Yttrium oxide is used to promote liquid phase sintering to make a high-density sintered body, and if the amount used is excessively small, the sintering promoting effect may not be sufficient. If the amount is excessively large, the segregation of the amorphous phase which is present within the sintered silicon nitride becomes greater, lowering the rolling fatigue life and increasing variation. Therefore, the amount of yttrium oxide added is preferably 1 to 5% by weight. Yttrium oxide may be sufficient when used in an amount up to 5% by weight to provide a suitable effect of the present invention. Aluminium oxide is also preferably used in an amount of 1 to 5% by weight for similar reasons.

At least one of titanium oxide, aluminium nitride and hafnium oxide is also added, each in a range of 0.1 to 5% by weight. These components can contribute individually or collectively in promoting sintering. Particularly, the addition of titanium oxide can be effective in improving bearing properties, such as rolling fatigue life.

Titanium oxide and hafnium oxide can work as a sintering promoting agent in the sintering process and may contribute to lower the amount of yttrium oxide used. After sintering, for example titanium oxide reacts with silicon nitride to produce titanium nitride, and hafnium oxide is believed to remain unreacted. The titanium nitride and hafnium oxide components, if used, are dispersed in the grain boundary in a granular state to reinforce the grain boundary. Thus, the rolling fatigue life properties can be improved. Particularly, the addition of titanium oxide can extensively improve rolling fatigue life.

Titanium oxide and hafnium oxide added may not improve the rolling fatigue life if used in a small amount but if used excessively, the effect to be improved is limited. Practically, either component is used in an amount of 5% by weight or below.

The aforementioned various sintering auxiliaries can enlarge the segregation of the amorphous phase if their total amount is excessively large but cannot provide a sufficient sintering promoting effect if used in an excessively small amount. Therefore, they are used in the range of 2 to 15% by weight.

An organic binder may be added to the above raw material powder if required, and a desired shaped wear-resistant member can be moulded. In this moulding process, any known moulding processes can be employed such as press moulding, extrusion moulding, injection moulding and others. The moulded product is then sintered by atmospheric pressure or increased pressure sintering or the like to produce a sintered silicon nitride. The above moulding process and the sintering process may be combined into one by using hot pressing.

In the above sintering step, it is important to set conditions so that porosity of the sintered body obtained becomes 2% or less. When the porosity of the sintered body obtained in the sintering step exceeds 2%, the amorphous phase which is mainly formed of the sintering auxiliary component is concentrated when the pores are substantially closed or filled by the next HIP process, tending to cause the segregation size to exceed 100 µm. Specific conditions are for example as follows. When sintering, the pressure is preferably 1.033 to 9.3 kg.cm⁻² (1 atm to 9 atm). The sintering temperature preferably ranges from 1650 °C to 1900 °C. The sintering temperature is preferably maintained for 1 hour to 4 hours.

Then, the above sintered body is subjected to HIP treatment to obtain the wear-resistant member formed of sjlicon nitride ceramic whose amorphous phase segregation is controlled to a size of 50 µm or below. This HIP treatment is effected such that the porosity does not exceed 1%. This is because when the porosity after the HIP treatment exceeds 1%, the wear-resistant member may not possess sufficient pressure-resistant strength.

As described above, using silicon nitride ceramic having a maximum segregation size in the amorphous phase of 50 µm or below makes it possible to provide a wear-resistant member which has a long rolling fatigue life and less variable service lives. The addition of yttrium oxide as the sintering auxiliary is limited to 5% by weight or below and titanium oxide or the like is added thereto for improvement in rolling fatigue life and to obtain wear-resistant members whose life and reliability are more consistent, and improved.

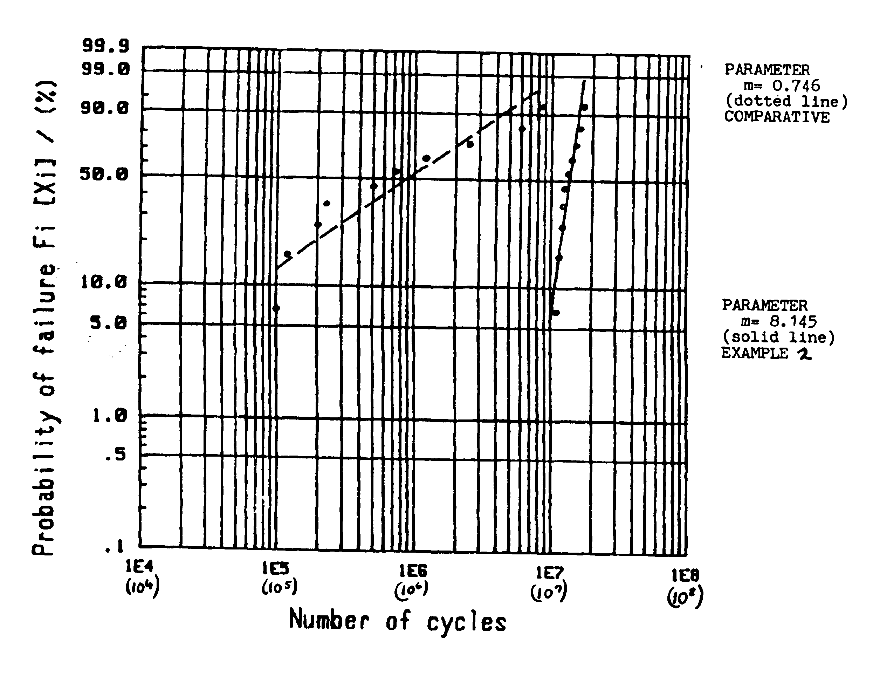

In order that the invention may be even further illustrated, the following non-limiting examples are described with reference to Figure 1, and compared with comparative examples.

In the accompanying drawing Figure 1 is a graph showing the results of rolling fatigue test of the sintered silicon nitride obtained by one embodiment (continuous line) of the present invention as compared with a conventional one (broken line) by Weibull plotting.

### Example 1

To Si₃N₄ powder were added as a sintering auxiliary 5% by weight of Y₂O₃ powder, 2% by weight of Al₂O₃, and 1% by weight of Ti0₂ powder. They were thoroughly mixed to prepare raw material powder. Then, the above raw material powder was added with about 5% by weight of an organic binder and mixed well.

Then, using the above mixed powder, a plurality of pellet-shaped moulded products were prepared by press moulding with various moulding pressures in the range of 1 t/cm₂ to 2 t/cm². The pellet-shaped moulded products were subjected to atmospheric or increased atmospheric pressure sintering in nitrogen gas. The sintering conditions included an atmospheric pressure of 1.033 to 10.33 kg.cm⁻² (1 atm to 10 atm), a sintering temperature of 1700 °C, to 1900 °C, and a sintering time (retention time at the sintering temperature) of 1 hour to 4 hours. At this point, each sintered body was measured for its porosity.

After that, the plurality of sintered bodies were subjected to HIP treatment to obtain a plurality of silicon nitride bearing members. The HIP treatment was effected under a pressure of 1033 kg.cm⁻² (1000 atm) with various treating temperatures of 1700 to 1900 °C and treating times of 0.5 hour to 2 hours. The silicon nitride members were measured for their porosity after this HIP treatment.

The above plurality of silicon nitride bearing members thus obtained were measured for the segregation size of the amorphous phase. The segregation size here means the maximum diameter (diameter of a circle including the segregation) of the largest segregation among the others of a plurality of amorphous phases existing within the sintered silicon nitride. The segregation size was measured by scan model electron microscope (SEM). Table 1 shows the segregation size as well as the production conditions of each silicon nitride bearing member.

It is seen from Table 1 that varying the moulding, sintering and HIP conditions varies the segregation size of the amorphous phase even when raw material powders of the same composition are used. To restrict the segregation size to 50 µm or below, it has been found that the porosity of the sintered body prior to the HIP treatment should preferably be made small as possible.

The silicon nitride members obtained were subsequently measured for their rolling fatigue life.

To measure the rolling fatigue life a simple-shaped slight type tester was used to examine the rolling fatigue life of the silicon nitride member itself and its variability. To clarify the working load and its repetitive times, the rolling fatigue life was determined on a sample disk and steel balls positioned as separated by 120 degrees on the circumference of a circle. The rolling fatigue life was measured under a load of 400 kgf and a revolution of 1500 r.p.m. until the exfoliation occurs on the sample disk of the sintered silicon nitride. When the steel ball was separated earlier, it was replaced with another one, and teh test was continued.

The results of the rolling fatigue test are also shown in Table 1.

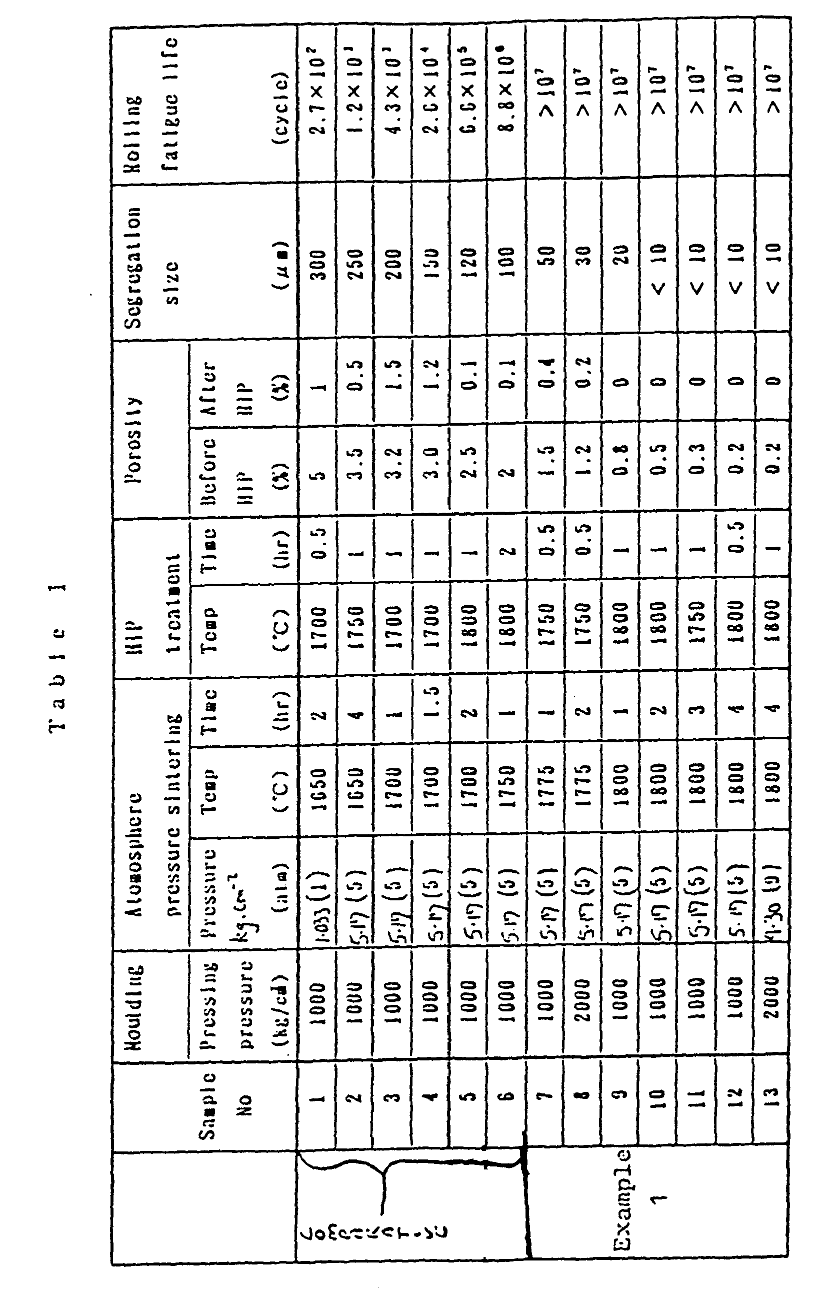

It is seen from Table 1 showing the results of rolling fatigue test that even when the segregation size of the amorphous phase is maximum, a long-life silicon nitride bearing member can be obtained when the size is not larger than 50 µm. Its rolling fatigue life is longer as compared with a silicon nitride member having a larger segregation size.

As in this Example, a silicon nitride member whose segregation size existing in the sintered silicon nitride was totally 50 µm or below was used to produce a ceramic ball bearing with a nominal diameter of 9.525 mm. The ceramic ball bearing obtained had a long rolling fatigue life to support the above-mentioned test results and was excellent as a ball bearing.

As the sintering auxiliary, using a composition different from this Example, for example one containing a slightly greater amount of Y₂O₃, the rolling fatigue life can be improved suitably by controlling the segregation size. Further, since it has been found that the rolling fatigue life and the segregation size are related, guidelines for production conditions in manufacturing a silicon nitride bearing member were obtained.

### Example 2

To Si₃N₄ powder were added as a sintering auxiliary composition, 5% by weight of Y₂O₃ powder, 1% by weight of TiO₂ powder and 2% by weight of Al₂O₃ powder. All these components were fully mixed to prepare a raw material powder.

Then, to that raw material powder about 5% by weight of an organic binder was added and mixed well. Press-moulding the mixture under a moulding pressure of 750 kg/cm² produced a pellet-shaped moulded product. Then the pellet-shaped moulded produced was sintered in nitrogen gas pressurized to 5.17 kg.cm⁻² (5 atm) at 1750 °C for four hours.

The sintered silicon nitride was then subjected to HIP treatment to produce a silicon nitride bearing member. The HIP treatment was effected in nitrogen gas under a pressure of 1033 kg.cm⁻² (1000 atm) at 1800 °C.

A plurality of samples of the silicon nitride bearing members having the above composition were subjected to the rolling fatigue life test in the same way as in Example 1, and Weibull probability paper was used for Weibull plotting of breaking probability. The segregation size of each sample amorphous phase was 100 µm or below at the maximum.

Breaking probability by the above rolling fatigue life test is shown by a solid line in Fig. 1. This test result was plotted into a straight line, whose inclination was used to obtain parameter m. It is seen from parameter m that the rolling fatigue life is variable. Specifically, a greater parameter m means that the straight line has a greater inclination and the rolling fatigue life extends over a narrow range, indicating a small variability. Conversely, a smaller parameter m means that the straight line has a smaller inclination and the rolling fatigue life extends over a wide range, indicating a large variability.

### Comparative Example 1

To Si₃N₄ powder a sintering auxiliary comprising 5% by weight of Y₂O₃ and 2% by weight of Al₂O₃ powder was added. They were thoroughly mixed to prepare a raw material powder. This raw material powder was used to prepare a silicon nitride bearing member in the same way as in Example 2.

For this silicon nitride bearing member, a plurality of samples were subjected to the rolling fatigue life test in the same way as in Example 2 and the results were Weibull plotted. Fig. 1 shows the results by a dotted line together with the results of Example 2. The segregation size of the amorphous phase of the sample in Comparative Example 1 exceeded a maximum of 100 µm.

It is clear from Fig. 1 that the silicon nitride bearing member according to Comparative Example 1 has a smaller parameter m, and the plotted straight (dotted) line inclines at a small angle against the horizontal axis in a wide range, and the fatigue life has a large variation. On the other hand, the silicon nitride bearing member according to Example 2 has a large parameter m and the plotted (solid) straight line is inclined at a large angle against the horizontal axis over a narrow range, and the fatigue life has little variation. Indeed, the fatigue life value itself is excellent compared to Comparative Example 1.

The raw material powder of the composition used in the above Example 2 was moulded into a prescribed shape by using a metal press, then sintered. The sintered body was then fabricated into a silicon nitride ball bearing having a nominal diameter or 3/8 inch (9.525 mm). The silicon nitride ball bearing obtained had excellent rolling fatigue life and corrosion resistance to supplement the aforementioned test results, and proved to be a very good rolling bearing product.

### Example 3

As a sintering auxiliary, Y₂O₃ powder, Al₂O₃ powder, AIN powder, TiO₂ powder and HfO₂ powder were respectively added to Si₃N₄ powder in the component ratio as shown in Table 2 to prepare a plurality of raw material powders.

To these raw material powders about 5% by weight of an organic binder was added and thoroughly mixed. The mixtures were respectively press-moulded under a moulding pressure of 750 kg/cm² to produce pellet-shaped moulded products. The pellet-shaped moulded products obtained were sintered in nitrogen gas pressurized to 5.17 kg.cm⁻² (5 atm) at 1750 °C for four hours.

Then, the plurality of sintered bodies were subjected to the HIP treatment to produce a plurality of silicon nitride bearing members. The HIP treatment was effected in nitrogen gas pressurized to 1033 kg.cm⁻² (1000 atm) at 1800 °C.

Each silicon nitride member thus obtained was measured for the segregation size of the amorphous phase in the same way as in Example 1. Porosity before and after the HIP treatment was also measured. The results obtained are shown together with the raw material compositions in Table 2 (Sample Nos. 5 to 13).

These silicon nitride bearing members were subjected to the rolling fatigue life test (in the same way as in Example 2) and the corrosion-resistance test. The corrosion-resistance test was conducted using three acidic solutions respectively of HCl, HNO₃, and H₂SO₄ at 90 °C, into which the silicon nitride members were respectively immersed for 100 hours. Then the silicon nitride members were measured for their weight loss ratio and strength retention.

These rolling fatigue test results and corrosion-resistance test results are also shown in Table 2. Weight loss and strength retention have been indicated in percentage terms.

### Comparative Example 2

As shown in Table 2, silicon nitride bearing members were produced by following the procedure of Example 3, except that in the raw material powder the amount of Y₂O₃ powder added was varied in the range 20% by weight of 6% by weight.

The various silicon nitride bearing members obtained were measured for porosity and segregation size, rolling fatigue life and corrosion-resistance by following the procedure of Example 3. The results obtained are shown in Table 2 (Sample Nos. 1 to 4).

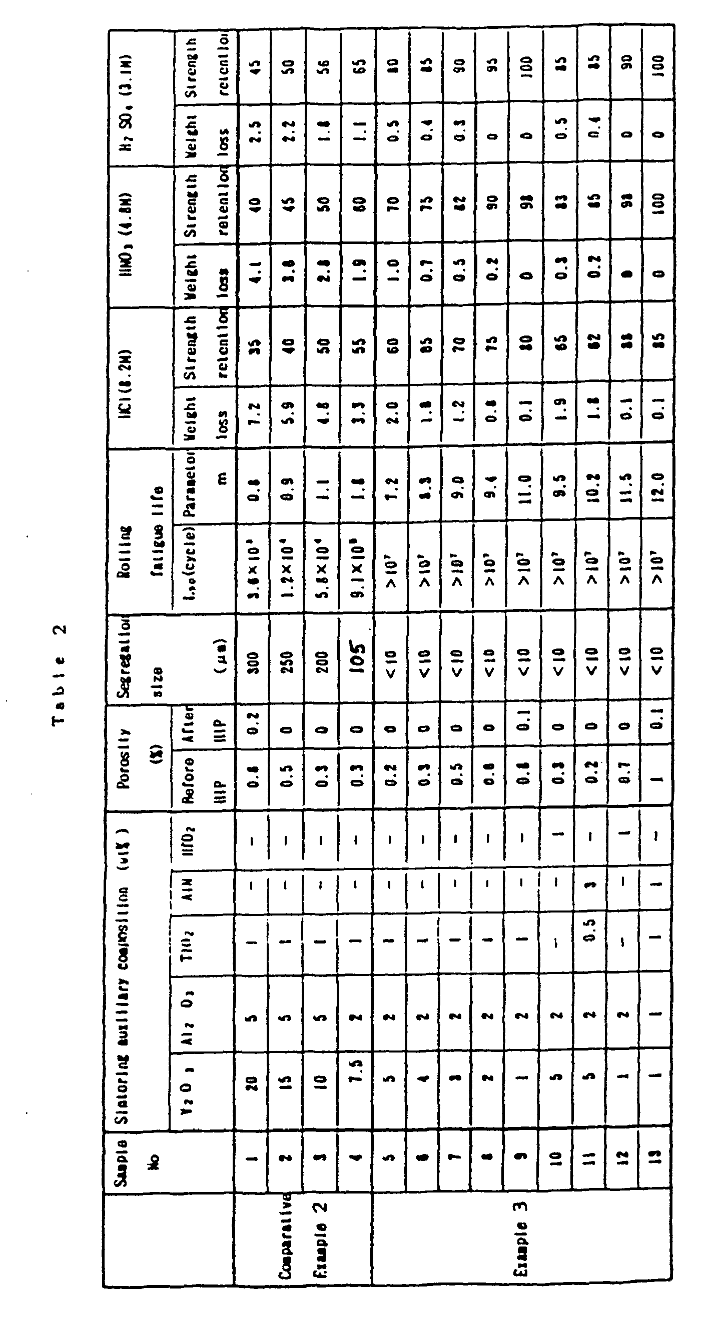

It is clear from Table 2 that the silicon nitride members obtained in the above Example 3 are excelling in rolling tatigue life and all of their sample plate have cleared 107 cycles. This is a value larger by 10 times or more of a conventional steel member. And, the corrosion resistance was also very goods. On the other hand, the silicon nitride members obtained in Comparative Example 2 had a short rolling fatigue life, over a wide variability.

## Claims

1. A wear-resistant member comprising ceramic material containing silicon nitride as a main component and 2 to 15% by weight of a sintering auxiliary component or composition comprising at least 0.1 to 5% by weight of yttrium oxide, and 0.1 to 5% by weight of aluminium oxide and further containing 0.1 to 5% by weight of at least one of: titanium oxide, hafnium oxide and aluminium nitride as said sintering auxiliary component, or within said composition wherein said ceramic has an amorphous phase mainly consisting of said sintering auxiliary component or composition and said amorphous phase has a segregation size of 50 µm or less; the wear-resistant member in the form of a bearing member.

2. A wear-resistant member as claimed in claim 1 in the form of a ball bearing.

3. A wear-resistant member as claimed in claim 1 in the form of a roller bearing.

4. A ball or roller bearing which comprises a wear-resistant member as defined in any one of claims 1 to 3.

## Patentansprüche

1. Verschleißbeständiges Bauteil, das ein keramisches Material aufweist, das Siliziumnitrid als eine Hauptkomponente und 2 bis 15 Gewichtsprozent einer Sinter-Hilfsstoff-Komponente oder -Zusammensetzung enthält, die mindestens 0,1 bis 5 Gewichtsprozent Yttriumoxid und 0,1 bis 5 Gewichtsprozent Aluminiumoxid aufweist und ferner 0,1 bis 5 Gewichtsprozent von mindestens einem von Titanoxid, Hafniumoxid und Aluminiumnitrid als die Sinter-Hilfsstoff-Komponente oder in der Zusammensetzung enthält, wobei die Keramik eine amorphe Phase aufweist, die hauptsächlich die Sinter-Hilfsstoff-Komponente oder -Zusammensetzung enthält, und die amorphe Phase eine Entmischungsgröße von 50 µm oder weniger aufweist, wobei das verschleißbeständige Bauteil in der Form eines Lagerelements vorgesehen ist.

2. Verschleißbeständiges Bauteil nach Anspruch 1 in der Form eines Kugellagers.

3. Verschleißbeständiges Bauteil nach Anspruch 1 in der Form eines Rollenlagers.

4. Kugel- oder Rollenlager, welches ein verschleißbeständiges Bauteil nach einem der Ansprüche 1 bis 4 enthält.

## Revendications

1. Elément résistant à l'usure comprenant du matériau céramique contenant du nitrure de silicium comme composant principal et de 2 à 15% en poids d'un composant ou d'une composition auxiliaire de frittage comprenant au moins de 0,1 à 5% en poids d'oxyde d'yttrium et de l'oxyde d'aluminium dans des proportions variant de 0,1 à 5% en poids et contenant en outre de 0,1% à 5% en poids d'au moins un oxyde de titane, oxyde d'hafnium et nitrure d'aluminium comme composant auxiliaire de frittage ou au sein de cette composition auxiliaire de frittage, dans lequel la céramique a une phase amorphe constituée principalement de ce composant ou composition auxiliaire de frittage, et la phase amorphe a une taille de ségrégation de 50 µm ou moins, l'élément résistant à l'usure étant sous la forme d'un élément de palier.

2. Elément résistant à l'usure selon la revendication 1 sous la forme d'un roulement à billes.

3. Elément résistant à l'usure selon la revendication 1 sous la forme d'un roulement à rouleaux

4. Roulement à billes ou roulement à rouleaux qui comprend un élément résistant à l'usure tel que défini à l'une quelconque des revendications 1 à 3.
